# EUROPEAN PATENT SPECIFICATION

(11) **EP 4 405 174 B1**
(45) Date of publication and mention of the grant of the patent: **12.02.2025**
(21) Application number: 23776578.9
(22) Date of filing: 13.09.2023
(51) Int. Cl.: B32B 37/10, B32B 37/02, B32B 21/06, B32B 29/00

(54) **METHOD OF PRODUCING LAMINATE BOARDS**
VERFAHREN ZUR HERSTELLUNG VON LAMINATPLATTEN
PROCÉDÉ DE PRODUCTION DE CARTES STRATIFIÉES

(30) Priority: 14.09.2022 EP 22195610
(43) Date of publication of application: 31.07.2024
(73) Proprietor: Beaulieu International Group NV, 8790 Waregem (BE)
(72) Inventor: HINDERSLAND, Leif Kåre, 4580 Lyngdal (NO); HAUSVIK, Tor Inge, 4580 Lyngdal (NO)
(74) Representative: De Clercq & Partners
(86) International application number: PCT/EP2023/075083
(87) International publication number: WO 2024/056699

(56) References cited:
- WO-A1-2016/142517
- WO-A1-2022/123401
- CH-A2- 712 343
- US-A1- 2006 172 118
- US-A1- 2006 172 118
- US-A1- 2013 251 935
- US-A1- 2017 368 788
- US-A1- 2020 207 118
- US-B2- 10 022 956

## Description

### TECHNICAL FIELD

The present invention in general relates to a method for producing an interim sheet used in the manufacture of a laminate board, and to a method for producing a laminate board.

### BACKGROUND

Laminate flooring is a popular alternative to parquet flooring or hardwood flooring due to its affordability and relatively easy installation. There are generally two methods for producing laminate boards used for laminate flooring: the High Pressure Laminate (HPL) process and the Direct Pressure Laminate (DPL) process.

The HPL process comprises impregnating kraft paper(s), decorating paper, and an overlay paper with a thermosetting resin, usually phenolic resin or melamine resin. The papers are then pressed while heated. The pressure used may typically be between 70 to 85 kg/cm² and the temperature used may typically be between 130 to 160°C. The duration of the pressing depends on the temperature but may typically be for 50 to 80 minutes, with a cooling down period of between 20 to 40 minutes. After approximately a day, the pressed papers are glued to a substrate, usually a High Density Fibreboard (HDF) or a Medium Density Fibreboard (MDF). The resulting laminate board is then stored for around 3 days before it is further processed, for example by profiling. The HPL process results in high-quality, durable laminate boards with a high product lifetime. However, due to the multi-step approach, the HPL process is laborious and time consuming. From raw material to finished product, the process usually takes 6 to 7 days.

The DPL process is a simpler process than the HPL process, wherein thermosetting resin impregnated overlay paper and decorative paper is pressed directly on the substrate, such as HDF or MDF. The pressing is performed at high temperature and for less than a minute. The DPL process is less time consuming and laborious than the HPL process and therefore results in a more low-cost final product. However, due to the fewer layers in the laminate board, the DPL laminate boards are less durable and more prone to scratches and dents.

US 2006/172118 A1 relates to a back-grooved laminate wood flooring in which a wood veneer of high pressure resin impregnation laminate (WPL) is laminated on a base selected from a vinyl chloride (PVC) resin layer, on oriented strand board (OSB), a high-density fibreboard (HDF) and a waterproof plywood.

US 2020/207118 A1 relates to an inkjet printing method for manufacturing decorative panels.

### SUMMARY OF THE INVENTION

The invention has for its object to remedy or to reduce at least one of the drawbacks of the prior art, or at least provide a useful alternative to prior art. The object is achieved through features, which are specified in the description below and in the claims that follow.

The invention is defined by independent patent claim 1. The dependent claims define advantageous embodiments of the invention.

In a first aspect, the invention relates to a method for producing an interim sheet. The method preferably comprises the steps of:
a) providing at least a first sheet material impregnated with a first thermosetting resin, and a second sheet material impregnated with a second thermosetting resin; and,
b) pressing the first and second sheet materials together, preferably at a temperature of between 60°C and 135°C, preferably between 60°C and 115°C, preferably for between 40 and 130 minutes, such that the first and second thermosetting resins become liquid, and pressing with a first sufficient pressure such that the first and second sheet materials fuse to form an interim sheet without fully curing the first and second thermosetting resins such that the first and second thermosetting resins can flow again when heated.

In some preferred embodiments, the method further comprises the step of digitally printing a motif on the interim sheet.

In some preferred embodiments, in step b) the temperature is between 80°C and 115°C, preferably around 90°C. In some preferred embodiments, in step b) the pressing occurs for between 60 to 110 minutes, preferably around 85 minutes. In some preferred embodiments, in step b) the first sufficient pressure is between 55 and 95 kg/cm², preferably between 65 and 85 kg/cm², preferably around 70 kg/cm².

In some preferred embodiments, the first and/or the second thermosetting resin each comprises phenol and/or melamine.

In a second aspect, however not within the scope of the invention, the present disclosure relates to an interim sheet obtained by the method according to the first aspect, or (preferred) embodiments thereof.

In a third aspect, the invention relates to method for producing a laminate board. The method comprises the step of producing an interim sheet according to the first aspect, or (preferred) embodiments thereof. The method further comprises the steps of
c) forming a stack comprising the following layers:
   - a substrate board; and,
   - the interim sheet of step b); and,
d) pressing the stack together, preferably at a temperature of between 170 and 230°C, preferably for between 10 and 60 seconds, preferably between 10 and 45 seconds, such that the first and second thermosetting resins flow again, and pressing with a second sufficient pressure such that the layers bond together to form a laminate board.

In some preferred embodiments, the stack in step c) comprises at least one of the following sheets:
∘ a decorative sheet impregnated with a third thermosetting resin;
∘ a decorative sheet not impregnated with a thermosetting resin and an overlay sheet impregnated with a fourth thermosetting resin, the overlay sheet being positioned as an outermost layer adjacent the decorative sheet in the stack; or,
∘ a decorative sheet impregnated with a third thermosetting resin and an overlay sheet impregnated with a fourth thermosetting resin, the overlay sheet being positioned above the decorative sheet in the stack.

In some preferred embodiments, the first and/or the second and/or the third and/or the fourth thermosetting resin each comprises phenol and/or melamine.

In some preferred embodiments, the interim sheet is in direct contact with the substrate board in the stack formed in step c).

In some preferred embodiments, in step c) the stack further comprises an adhesive sheet positioned between the substrate board and the interim sheet, wherein the adhesive sheet is impregnated with a fifth thermosetting resin, preferably wherein the fifth thermosetting resin comprises melamine.

In some preferred embodiments, in step c) the stack further comprises a balancing sheet, impregnated with a sixth thermosetting resin, preferably wherein the sixth thermosetting resin comprises melamine.

In some preferred embodiments, step d) comprises heating an uppermost side of the stack with a first temperature and a lowermost side of the stack with a second temperature different from the first temperature.

In some preferred embodiments, in step d) the pressing occurs for between 15 to 45 seconds, preferably between 20 to 35 seconds, preferably around 30 seconds. In some preferred embodiments, in step d) the second sufficient pressure is between 40 and 80 kg/cm², preferably between 50 and 70 kg/cm², preferably around 60 kg/cm².

In some preferred embodiments, in step d) the stack is pressed with a press plate on the uppermost side of the stack.

In some preferred embodiments, the method comprises the step of perforating at least one of the sheet materials. Preferably the method comprises the step of perforating the interim sheet.

In a fourth aspect, however not within the scope of the invention, the present disclosure relates to a laminate board obtained by the method according to the third aspect of the invention, and (preferred) embodiments thereof.

The present disclosure, while not within the scope of the invention, also relates to a laminate board comprising a perforated layer, preferably a perforated interim sheet. Preferably, the laminate board is obtained by the method according to the third aspect of the invention, and (preferred) embodiments thereof.

### DETAILED DESCRIPTION OF THE FIGURES

In the following is described examples of preferred embodiments illustrated in the accompanying drawings, wherein:
**Fig. 1** illustrates a method for producing a laminate board according to an embodiment of the invention.
**Fig. 2** illustrates an alternative method for producing a laminate board according to an embodiment of the invention.
**Fig. 3** illustrates a further alternative method for producing a laminate board according to an embodiment of the invention.
**Fig. 4A** and **Fig. 4B** illustrate a perforated sheet material that may be used according to an embodiment of the invention.
**Fig. 5A, Fig. 5B,** and **Fig. 5C** illustrate a perforated sheet material that may be used according to an embodiment of the invention.

The following numbering will be adhered to in the figures:
10 - kraft paper; 11 - interim sheet; 12 - adhesive sheet; 13 - decorative sheet; 14 - overlay sheet; 15 - substrate board; 16 - balancing sheet; 17 - groove paper; 20 - sub stack; 21 - stack; 30 - laminate board; 100 - first pressing step; 101 - cutting/grinding step; 102 - second pressing step.

Any positional indications refer to the position shown in the figures. In the figures, same or corresponding elements are indicated by same reference numerals. For clarity reasons, some elements may in some of the figures be without reference numerals. A person skilled in the art will understand that the figures are just principal drawings. The relative proportions of individual elements may also be distorted.

### DETAILED DESCRIPTION OF THE INVENTION

When describing the invention, the terms used are to be construed in accordance with the following definitions, unless the context dictates otherwise.

As used herein, the singular forms "a", "an", and "the" include both singular and plural referents unless the context clearly dictates otherwise. By way of example, "a resin" means one resin or more than one resin.

The terms "comprising", "comprises" and "comprised of" as used herein are synonymous with "including", "includes" or "containing", "contains", and are inclusive or open-ended and do not exclude additional, non-recited members, elements, or method steps. It will be appreciated that the terms "comprising", "comprises" and "comprised of" as used herein comprise the terms "consisting of", "consists" and "consists of".

The recitation of numerical ranges by endpoints includes all integer numbers and, where appropriate, fractions subsumed within that range (e.g., 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g., from 1.0 to 5.0 includes both 1.0 and 5.0). Any numerical range recited herein is intended to include all sub-ranges subsumed therein.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art.

The terms described above, and others used in the specification are well understood to those skilled in the art.

Preferred statements (features) and embodiments, resins, articles, methods, and uses of this invention are set herein below. Each statement and embodiment of the invention so defined may be combined with any other statement and/or embodiment unless clearly indicated to the contrary. In particular, any feature indicated as being preferred or advantageous may be combined with any other feature or features or statements indicated as being preferred or advantageous.

The independent and dependent claims set out particular and preferred features of the invention. Features from the dependent claims may be combined with features of the independent or other dependent claims as appropriate.

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In a first aspect the invention relates to a method for producing an interim sheet. The method preferably comprises the steps of:
a) providing at least a first sheet material impregnated with a first thermosetting resin, and a second sheet material impregnated with a second thermosetting resin; and,
b) pressing the first and second sheet materials together (preferably at a temperature of between 60°C and 135°C, preferably between 60°C and 115°C, preferably for between 40 and 130 minutes) such that the first and second thermosetting resins become liquid, and pressing with a first sufficient pressure such that the first and second sheet materials fuse to form an interim sheet without fully curing the first and second thermosetting resins such that the first and second thermosetting resins can flow again when heated.

In the pressing step, the first and second thermosetting resins are heated to a point where they become liquid. By the term "liquid" it is meant that the thermosetting resins are flowable enough to at least partially flow into the alternative sheet material from the sheet material in which they are originally impregnated. That is to say, the first thermosetting resin is in a liquid phase according to the present disclosure when at least part of the first thermosetting resin is flowable enough that it may flow into the second sheet material. The second thermosetting resin is in a liquid phase according to the present disclosure when at least part of the second thermosetting resin is flowable enough that it may flow into the first sheet material.

The advantage of the method according to the first aspect of the invention is that the first and second thermosetting resin are not completely cured after the pressing of the sheet material. That is, at least a part of the first and second thermosetting resins may flow again when heated. If the interim sheet is pressed together with other sheets in a stack at a suitable temperature and for a suitable period of time, the first and second thermosetting resin may flow, at least partially, into the adjacent sheets such that the sheets in the stack may adhere as the stack is pressed.

The present invention also has the advantage that it is a less complex process, compared to processes comprising multiple semi-curing steps.

Furthermore, the inventors have found that, if during step b) the temperature is too high, the layers closest to the heating tend to harden too much, caused by the heat gradient. With lower temperatures and longer times according to the invention, such issues may be avoided. All of this results in a more efficient process that still provides a durable laminate board with a high quality.

In a second aspect, however not within the scope of the invention, the present disclosure relates to an interim sheet obtained by the method according to the first aspect of the invention. (Preferred) embodiments of the first aspect are also (preferred) embodiments of the second aspect and vice versa.

In a third aspect the invention relates to a method for producing a laminate board. The method preferably comprises the step of producing an interim sheet according to the first aspect, or (preferred) embodiments thereof. The method preferably further comprises the steps of:
- forming a stack comprising the following layers:
   ∘ a substrate board;
   ∘ the interim sheet produced according to the first aspect, or (preferred) embodiments thereof; and,
- pressing the stack together (preferably at a temperature of between 170 and 230°C, preferably for between 10 and 60 seconds, preferably between 10 and 45 seconds, such that the first and second thermosetting resins flow again, and pressing with a second sufficient pressure such that the layers bond together to form a laminate board.

Therefore, the method according to the third aspect preferably comprises the steps of:
a) providing at least a first sheet material impregnated with a first thermosetting resin, and a second sheet material impregnated with a second thermosetting resin; and,
b) pressing the first and second sheet materials together, preferably at a temperature of between 60°C and 135°C, preferably between 60°C and 115°C, preferably for between 40 and 130 minutes, such that the first and second thermosetting resins become liquid, and pressing with a first sufficient pressure such that the first and second sheet materials fuse to form an interim sheet without fully curing the first and second thermosetting resins such that the first and second thermosetting resins can flow again when heated.

The method according to the third aspect preferably also comprises the steps of:
c) forming a stack comprising the following layers:
   - a substrate board;
   - the interim sheet of step b); and,
d) pressing the stack together, preferably at a temperature of between 170 and 230°C, preferably for between 10 and 60 seconds, preferably between 10 and 45 seconds, such that the first and second thermosetting resins flow again, and pressing with a second sufficient pressure such that the layers bond together to form a laminate board.

In some preferred embodiments, the stack in step c) comprises at least one of the following sheets:
∘ a decorative sheet impregnated with a third thermosetting resin;
∘ a decorative sheet not impregnated with a thermosetting resin and an overlay sheet impregnated with a fourth thermosetting resin, the overlay sheet being positioned as an outermost layer adjacent the decorative sheet in the stack; or,
∘ a decorative sheet impregnated with a third thermosetting resin and an overlay sheet impregnated with a fourth thermosetting resin, the overlay sheet being positioned above the decorative sheet in the stack.

Such methods provide an easy way to build thickness early on and then decide the design in a later step.

In some preferred embodiments, the stack in step c) comprises a decorative sheet impregnated with a third thermosetting resin. In some preferred embodiments, the stack in step c) comprises a decorative sheet not impregnated with a thermosetting resin and an overlay sheet impregnated with a fourth thermosetting resin, the overlay sheet preferably being positioned as an outermost layer adjacent the decorative sheet in the stack. n some preferred embodiments, the stack in step c) comprises a decorative sheet impregnated with a third thermosetting resin and an overlay sheet impregnated with a fourth thermosetting resin, the overlay sheet preferably being positioned above the decorative sheet in the stack.

In the option whereby the stack in step c) comprises a decorative sheet not impregnated with a thermosetting resin and an overlay sheet impregnated with a fourth thermosetting resin, the overlay sheet being positioned as an outermost layer adjacent the decorative sheet in the stack; it is clear that in this option, it is the decorative sheet not impregnated with a thermosetting resin that is adjacent the overlay sheet, as previously referred to in said same option.

In the option whereby the stack in step c) comprises a decorative sheet impregnated with a third thermosetting resin and an overlay sheet impregnated with a fourth thermosetting resin, the overlay sheet being positioned above the decorative sheet in the stack; it is clear that in this option, the overlay sheet is positioned above the decorative sheet impregnated with a third thermosetting resin as previously referred to in said same option.

(Preferred) embodiments of the first aspect are also (preferred) embodiments of the third aspect and vice versa.

The method according to the third aspect of the invention may have several advantages. Firstly, the interim sheet is not completely cured after the pressing. By the term "not completely cured" it is meant that at least part of the first and second thermosetting resins may flow again upon heating after cooling down after step b). The first and second thermosetting resin may, upon heating and at least partially, flow into the adjacent sheets in the stack such that the sheets in the stack may adhere together upon being pressed together in step d).

Due to the second pressing of the interim sheet with the substrate board, the method according to the invention may be faster. Pressing the stack together takes typically between 10 and 60 seconds. Typically, glue is not required during the process. If glue is used, the process may provide a reduction in the amount of glue required. In some examples there may be no glue used in the process. Where the use of glue is eliminated, there is no need to wait until the glue has dried. Where the use of glue is reduced, the time required to wait until the glue has dried to start further processing steps with the final laminate board is reduced. The further processing steps may be for example profiling of the final laminate board. After the final pressing step, the laminate board only needs to cool down, typically to a temperature of between 20 to 30°C. The cooling can be done in a cooler system before further processing. The whole process typically takes up to 4 days, or preferably 1 to 2 days until a final laminate board is complete and can be packed.

Secondly, by pressing the first and second sheet materials together in a first step, without the decorative sheet and the overlay sheet, the pressing capacity increases. Normally when stacks of kraft papers, a decorative sheet, and an overlay sheet are pressed together, press plates, typically made of a metal, are placed between the stacks to create texture on the surface of the final laminate board. When only pressing the first and second sheet materials together, there is no need to create a texture on the surface, and therefore no need of press plates at this stage. A thin release sheet may be placed between each of the sub stacks in the press so that the interim sheets can easily be separated after pressing. The release sheets take up less space than the press plates, and thus a higher number of sub stacks can be pressed at the same time. The term "pressing capacity" refers to the number of units of sub stacks that can be pressed at the same time in one press. The term stack or sub stack is used herein to mean an assembly of sheets positioned on top of each other.

Moreover, the planning step, which decides the final visual appearance of the laminate boards, is postponed to after the interim sheet is formed. This is at a later stage compared to a procedure where the kraft papers, the decorative sheet, and the overlay sheet are pressed together in a single step. The texture of the final laminate board may also be decided in the last pressing step, by pressing the decorative sheet or the overlay sheet with a press plate. The method according to the invention may therefore be more flexible. By using this flexible method, the customer may have his/her desired design faster. Less storage space is needed, and the laminate board may arrive to the customer in a short period of time.

The method according to the third aspect of the invention may be a more efficient process, while still resulting in durable laminate boards with a high quality. The interim sheet gives the final laminate boards a thickness that leads to a strong laminate board that is less prone to scratches and dents.

Furthermore, the method according to the invention may lead to less tension in the final laminate board. If different type of sheets impregnated with different thermosetting resins are pressed together, tensions may occur in the interim sheet or laminate board due to a difference in the thermosetting resins' ability to retain the water. By pressing for example two kraft papers together, which have been impregnated with the same thermosetting resin, there may be less tension in the interim sheet causing less bending of the laminate board.

Furthermore, the two-step pressing process may result in less tension and bending of the final laminate board than a process with one pressing step and one gluing step, due to water being released in two pressing steps rather than one. During the first pressing step, the fibres in the interim sheet may stabilise with the liquid, so that a lot of the movement of the fibres in the interim sheet will have been completed before the second pressing step. Furthermore, the two pressing steps may lead to less moisture in the laminate board. Less moisture in a laminate board will decrease movement in the laminate board when it is exposed to low humidity, for example during the winter.

In some preferred embodiments, the method according to the third aspect preferably also comprises the step of digitally printing a motif on the interim sheet, preferably prior to the step of forming a stack.

The method as described above may have many advantages. Firstly, the interim sheet is not completely cured after the pressing. The first and second thermosetting resins may therefore flow again upon heating. The first and second thermosetting resin may, upon heating and at least partially, flow into the adjacent sheets in the stack such that the sheets in the stack may adhere together upon being pressed together in step d).

Secondly, the second pressing of the interim sheet with the substrate board, the method according to the invention may be faster, as explained above.

Furthermore, the method according to the third aspect of the invention has an increased pressing capacity for the first pressing step.

The method according to the third aspect of the invention may be a more efficient process, while still resulting in custom decorated durable laminate boards with a high quality. The interim sheet gives the final laminate boards a thickness that leads to a strong laminate board that is not prone to scratches and dents.

Furthermore, the method according to the third aspect of the invention may lead to less tension in the final laminate board, as explained for the third aspect of the invention. By pressing for example two kraft papers together, which have been impregnated with the same thermosetting resin, there may be less tension in the interim sheet and thus less bending of the interim sheet. This may facilitate printing the decorative motif on the interim sheet.

The method according to the third aspect of the invention may allow for custom made laminate boards. The decorative motif can be chosen by the customer and digitally printed directly on the interim sheet. The method according to the third aspect of the invention is efficient, and the customer may have his/her custom designed laminate boards faster.

In a fourth aspect, however not within the scope of the invention, the present disclosure relates to a laminate board obtained by the method according to the third aspect of the invention. (Preferred) embodiments of the third aspect are also (preferred) embodiments of the fourth aspect and vice versa.

The term "substrate board" refers to a board suitable for forming a laminate board for use on a floor or on a wall. The substrate board may for example be an HDF, an MDF or a plywood board.

The term "decorative sheet" refers to a cellulose paper with a decorative design such as wood imitation, or any other designs.

The term "overlay sheet" refers to a cellulose paper, which may improve durability of the final laminate board and reduce the risk of abrasion of the final laminate board. The overlay sheet may be at least partially translucent and/or at least partially transparent. The overlay sheet may preferably comprise corundum.

The term "balancing sheet" refers to a layer, impregnated with a thermosetting resin, positioned adjacent to a substrate board, on the opposite side as the sheets making up the decorative side of the final laminate board. The composition of the balancing sheet depends on the layers on the opposite side of the substrate board. The balancing sheet may for example comprise one or more groove papers or an interim laminate.

The term "adhesive sheet" refers to a cellulose paper capable to take up a thermosetting resin. Alternative words for adhesive sheet may be impregnation paper or suction paper. The purpose of the adhesive sheet is to increase the adhesion between the substrate board and the interim laminate. The adhesive sheet is preferably impregnated with a thermosetting resin comprising melamine.

The terms "stack" and "sub stack" are used herein to mean an assembly of sheets positioned on top of each other.

The term "thermosetting resin" refers to a soft solid or a viscous liquid of polymer that hardens upon heating. Heating the thermosetting resin results in cross-linking of the polymer chains in the thermosetting resin, which results in curing of the thermosetting resin.

By the term "liquid" it is meant that the first thermosetting resins are flowable enough to at least partially flow into the alternative sheet material from the sheet material in which they are originally impregnated. That is to say, the first thermosetting resin is in a liquid phase according to the present disclosure when at least part of the first thermosetting resin is flowable enough that it may flow into the second sheet material. The second thermosetting resin is in a liquid phase according to the present disclosure when at least part of the second thermosetting resin is flowable enough that it may flow into the first sheet material.

By the term "not completely cured" it is meant that at least a part of the first and second thermosetting resins may flow again after the first pressing step, upon heating. If the interim sheet is pressed together with other sheets in a stack at a suitable temperature and for a suitable period of time, the first and second thermosetting resin may flow, at least partially, into the adjacent sheets such that the stack may adhere together upon being pressed together. As used herein, the term "tension" refers to the interim sheet's or the laminate board's tendency to bend when exposed to changes in temperature and/or humidity.

In some embodiments, the step of providing at least a first sheet material impregnated with a first thermosetting resin comprises the steps of:
a11) providing at least a first impregnatable sheet material; and
a12) impregnating the first impregnatable sheet material with a first thermosetting resin.

The first impregnatable sheet material may be a kraft paper. The first impregnatable sheet material may be a groove paper.

In some embodiments, the step of providing a second sheet material impregnated with a second thermosetting resin comprises the steps of:
a21) providing at least a second impregnatable sheet material; and
a22) impregnating the second impregnatable sheet material with a second thermosetting resin.

The second impregnatable sheet material may be a kraft paper. The second impregnatable sheet material may be a groove paper.

In some preferred embodiments, in step b) the temperature is between 60°C and 135°C, preferably between 60°C and 115°C, preferably between 80°C and 115°C, preferably around 90°C. These temperatures have been found to provide optimal results. A temperature that is too low will not laminate the product well enough (may cause delamination) and may cause gas bubbles. A temperature that is too high will overcure the product and cause delamination in the last step.

In some preferred embodiments, in step b) the pressing may be performed for between 40 and 130 minutes, preferably between 60 to 110 minutes, preferably around 85 minutes. These times have been found to provide optimal results. A pressing time that is too short will not laminate the product well enough (may cause delamination). A pressing time that is too long will overcure the product and cause delamination in the last step.

In some preferred embodiments, in step b) the first sufficient pressure may be between 55 and 95 kg/cm², preferably between 65 and 85 kg/cm², preferably around 70 kg/cm². These pressures have been found to provide optimal results. Using a pressure outside these ranges may cause cracking or delamination.

One of the first sheet and the second sheet may be a white sheet for improving the aesthetic appearance of the final, digitally printed, laminate board. In other examples another colour may be chosen.

In some embodiments, the first sheet material comprises paper. The first sheet material may be a kraft paper. The first sheet material may be a groove paper.

In some embodiments, the first sheet material comprises paper. The second sheet material may be a kraft paper. The second sheet material may be a groove paper. These materials are environmentally friendly and cheap to use. The present invention also includes the use of other materials for the first and/or second sheet. Using other materials may change the setup in both temperature and press time, but still within the preferred ranges as described herein.

The term "first sheet material" preferably refers to a kraft paper or a groove paper. The term "second sheet material" preferably refers to a kraft paper, or a groove paper.

The term "kraft paper" refers to a high strength paper produced by sulphate pulp. The kraft paper may be bleached or unbleached. The paper weight of the kraft paper may preferably be between 60 to 300 g/m². The kraft paper may be a recycled kraft paper. The term "groove paper" refers to a cellulose paper capable to take up a thermosetting resin. Alternative words for groove paper may be impregnation paper or suction paper.

The method according to the first aspect of the invention may for example be used to press two kraft papers together. The resulting interim sheet may then be used to form a stack of sheets together with for example a substrate board, a decorative sheet, and an overlay sheet. The stack may be pressed together to form a laminate board.

When pressing together two kraft papers, which have been impregnated with the same thermosetting resin, the resulting interim sheet may have less tension. That is, the interim sheet may not be prone to bending. Due to the resulting flat structure of the interim sheet, the interim sheet may more easily be used for printing than if the interim sheet was bent after the pressing step. This may lead to a better quality of the decoration of a final laminate product.

The first thermosetting resin may comprise phenol. The first thermosetting resin may comprise melamine. The first thermosetting resin may comprise phenol and melamine. The second thermosetting resin may comprise phenol. The second thermosetting resin may comprise melamine. The second thermosetting resin may comprise phenol and melamine. The first and/or second thermosetting resin may comprise any other suitable thermosetting resin.

The third thermosetting resin may comprise phenol. The third thermosetting resin may comprise melamine. The third thermosetting resin may comprise phenol and melamine. The fourth thermosetting resin may comprise phenol. The fourth thermosetting resin may comprise melamine. The fourth thermosetting resin may comprise phenol and melamine. The first and/or the second and/or the third and/or the fourth thermosetting resin each comprises any other suitable thermosetting resin.

Preferably, the first sheet material is a kraft paper and the second sheet material is a kraft paper. Preferably, the first and second sheet material are impregnated with a phenolic thermosetting resin. Preferably, the decorative sheet and the overlay sheet are impregnated with a thermosetting resin comprising melamine. It is advantageous to impregnate the decorative sheet and overlay sheet with a thermosetting resin that does not comprise phenol due to miscolouring of the sheets upon curing if the phenolic thermosetting resin.

If both the overlay sheet and the interim sheet are impregnated with a thermosetting resin comprising melamine, for example a mixture of 30% melamine and 70% phenol, then decorative sheet, which is positioned between the two impregnated sheets, does not have to be impregnated with a thermosetting resin before step d). During step d) the thermosetting resins from the overlay sheet and the interim sheet may at least partially flow into each side of the decorative sheet so that the three sheets may adhere together upon curing of the two thermosetting resins. The advantage of not impregnating the decorative sheet before pressing the stack together is that it saves time and reduces the use of thermosetting resins.

In some embodiments, the decorative sheet is impregnated with a third thermosetting resin. In some embodiments, the decorative sheet not impregnated with a thermosetting resin and the overlay sheet is impregnated with a fourth thermosetting resin, preferably the overlay sheet is positioned as an outermost layer adjacent the decorative sheet in the stack.

In some embodiments, the decorative sheet is impregnated with a third thermosetting resin and the overlay sheet is impregnated with a fourth thermosetting resin, preferably the overlay sheet is positioned above the decorative sheet in the stack.

In some preferred embodiments, the method may further comprise the step of digitally printing a motif on the interim sheet.

In some preferred embodiments, the interim sheet is in direct contact with the substrate board in the stack formed in step c).

In step c) the stack may further comprise an overlay sheet positioned as an outermost layer adjacent the interim sheet, wherein the overlay sheet is impregnated with a third thermosetting resin. The overlay sheet may be a cellulose paper, which may be added to the stack to improve durability and to reduces the risk of abrasion of the final laminate board.

In some preferred embodiments, in step c) the stack further comprises an adhesive sheet positioned between the substrate board and the interim sheet, wherein the adhesive sheet is impregnated with a fifth thermosetting resin. If the first or second thermosetting resin does not comprise melamine, it is advantageous to add an adhesive sheet impregnated with melamine between the substrate board and the interim sheet to increase the adhesion between the layers in the stack. The pressing step of d) is typically less than a minute, and melamine has a high reactivity and will cure during this step.

The fifth thermosetting resin may comprise melamine. The fifth thermosetting resin may comprise phenol and melamine. The fifth thermosetting resin may comprise any other suitable thermosetting resin.

In some preferred embodiments, in step c) the stack further comprises a balancing sheet, impregnated with a sixth thermosetting resin. The balancing sheet may reduce tension in the laminate board and may reduce the risk of the laminate board to shrink or bend.

The sixth thermosetting resin may comprise melamine. The sixth thermosetting resin may comprise phenol and melamine. The sixth thermosetting resin may comprise any other suitable thermosetting resin.

In some preferred embodiments, step d) comprises heating an uppermost side of the stack with a first temperature and a lowermost side of the stack with a second temperature different from the first temperature. The lowermost side of the stack may be the side formed by the substrate board or the balancing sheet, and the uppermost side may be the side formed by the decorative sheet or the overlay sheet. The temperature may be higher on the lowermost side than the uppermost side during pressing. The difference in temperature may reduce tension in the laminate board and may reduce the risk of the laminate board to shrink or bend. The pressing temperature is preferably between 170 to 230°C. Different temperatures are preferably used on the top of the stack and the bottom of the stack, for about 210°C on the lower side and 200°C on the upper side. The inventors have found that these provide optimal temperatures to avoid delamination, debonding, and/or cracking of the final laminate. Working outside the preferred temperature ranges also increases the odds of uneven dimensional stability.

In step d) the pressing may be for between 10 to 60 seconds, preferably between 10 and 45 seconds, preferably between 15 to 45 seconds, preferably between 20 to 35 seconds, preferably around 30 seconds. The inventors have found that these provide optimal pressing times to avoid delamination, debonding, and/or cracking of the final laminate. Lower pressing times may make more volume and increase production, but the risk is debonding. Longer pressing times on the other hand will decrease production and could cause too much pressure on the substrate (HDF) making it too thin. The present ranges provide a correct balance between output and quality. Working outside the preferred time ranges also increases the odds of uneven dimensional stability.

In some embodiments, step d) is performed at a lower pressing temperature for a longer pressing time, such as at a pressing temperature of at most 170°C but for a time of at least 60 seconds. For example, step d) may be performed at a pressing temperature of at most 150°C but for a time of at least 5 minutes; for example at a pressing temperature of at most 130°C but for a time of at least 20 minutes; for example at a pressing temperature of at most 115°C but for a time of at least 60 minutes.

In step d) the second sufficient pressure may be between 40 and 80 kg/cm², preferably between 50 and 70 kg/cm², preferably around 60 kg/cm². The inventors have found that these provide optimal pressures to avoid delamination, and/or cracking of the laminate.

In step d) the stack may be pressed with a press plate on the uppermost side of the stack. The press plate forms structures on the surface of the laminate board allowing for laminate boards to be customised to the preference of the consumer. The structures may improve the visual appearance of the laminate on the decorative side of the laminate board.

The present invention also relates to the use of an interim sheet obtained as described herein to obtain a laminate board, preferably a laminate board as described herein.

In some embodiments, at least one of the sheet materials is perforated. This has the advantage that trapped gas can be evaporated. The perforations may be random or organised. The perforations may be spread out over the sheet, up to the edge. In some embodiments, the first sheet material is perforated. In some embodiments, the second sheet material is perforated. In some embodiments, the first sheet material and/or the second sheet material is perforated. In some preferred embodiments, the resulting interim sheet is perforated. In some embodiments, the decorative sheet is perforated. In some embodiments, the overlay sheet material is perforated. In some embodiments, the method comprises the step of perforating at least one of the sheet materials. In some embodiments, the method comprises the step of perforating the first sheet material and/or the second sheet material. In some embodiments, the method comprises the step of perforating the interim sheet.

The present disclosure, while not within the scope of the invention, also relates to a perforated sheet, preferably a perforated interim sheet.

Preferably the perforated interim sheet is obtained through a method as described herein.

The present disclosure, while not within the scope of the invention, also relates to a laminate board comprising a perforated layer, preferably a perforated sheet, preferably a perforated interim sheet. Preferably the laminate board is obtained through a method as described herein.

The present invention also relates to a method as described herein, comprising the step of perforating at least one of the sheet materials. In some embodiments, the method comprises the step of perforating the interim sheet.

In some embodiments, the average distance between perforations is at least 1.0 mm to at most 15.0 mm, preferably from at least 1.0 mm to at most 10.0 mm, preferably from at least 2.0 mm to at most 8.0 mm, preferably from at least 4.0 mm to at most 7.0 mm, preferably about 6.0 mm.

In some embodiments, the perforations are present in at least 1 perforation per cm², preferably at least 2 perforations per cm², preferably at least 3 perforations per cm², preferably at least 4 perforations per cm².

In some embodiments, the perforations have an average diameter of at least 0.02 mm to at most 3.00 mm, preferably of at least 0.05 mm to at most 2.00 mm, preferably of at least 0.10 mm to at most 1.00 mm.

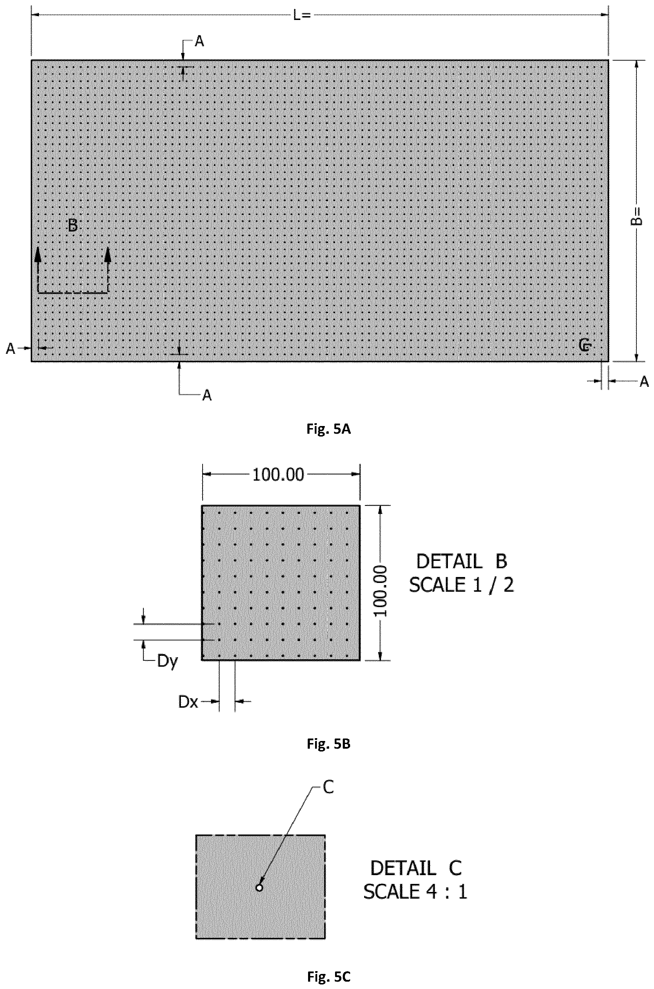

In some embodiments, the length L as defined in **FIG. 5A** ranges from at least 1250 to at most 6000 mm. In some embodiments, the width W as defined in **FIG. 5A** ranges from at least 600 to at most 2500 mm. In some embodiments, distance parameter A as defined in **FIG. 5A** ranges from at least 0 to at most 200 mm. In some embodiments, distance parameter B as defined in **FIG. 5A** ranges from at least 16 to at most 300 mm. In some embodiments, parameter C as defined in **FIG. 5A** and **FIG. 5C** ranges from at least 0.05 to at most 2 mm. In some embodiments, distance parameter Dx as defined in **FIG. 5B** ranges from at least 0.05 to at most 20 mm. In some embodiments, distance parameter Dy as defined in **FIG. 5B** ranges from at least 0.05 to at most 20 mm.

### EXAMPLES

The following examples serve to merely illustrate the invention and should not be construed as limiting its scope in any way. While the invention has been shown in only some of its forms, it should be apparent to those skilled in the art that it is not so limited, but is susceptible to various changes and modifications without departing from the scope of the invention.

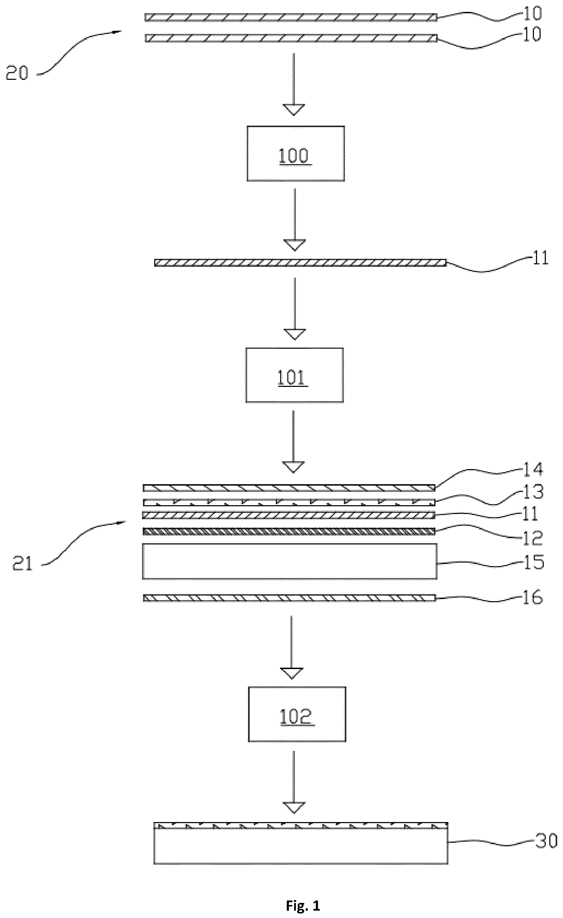

**Fig. 1** shows a method for producing a laminate board 30, according to an embodiment of the invention. A first and a second sheet material, here shown as two kraft papers 10 have each been impregnated with a thermosetting resin comprising phenol, and are stacked on top of each other, forming a sub stack 20. The first pressing step 100 comprises a step of pressing the sub stack 20 together. The pressure is around 70 kg/cm², and the temperature in the press is between 80 to 115°C. The sub stack 20 is pressed for 60 to 110 minutes. Several sub stacks 20 may be pressed at the same time, with release sheets between the sub stacks 20.

The first pressing step 100 results in an interim sheet 11, which is not completely cured. The interim sheet 11 may therefore adhere to other sheets in a stack when the stack is pressed in a subsequent pressing step.

After the interim sheet 11 has cooled down sufficiently, to for example room temperature or between 20 and 30°C, preferably around 25°C either inside or outside the press, or in a cooler system, the interim sheet 11 is cut to a desired size and grinded in step 101. The grinding may improve adhesion of the layers in the subsequent assembly step and allow better penetration of the thermosetting resin and melamine into the laminate.

A stack 21 is then assembled. Four layers may be stacked on top of a substrate board 15, for example a HDF board, in the following order: the interim sheet 11, a decorative sheet 13 and an overlay sheet 14. An adhesive sheet 12 may be optionally incorporated in the stack 21. The decorative sheet 13 and the overlay sheet 14 may be impregnated with a thermosetting resin comprising melamine. In embodiments including the optional adhesive sheet 12, the decorative sheet 13, and the overlay sheet 14 may be impregnated with a thermosetting resin comprising melamine. A balancing sheet 16, impregnated with a thermosetting resin comprising melamine, is positioned underneath the substrate board 15 to reduce tension in the final laminate board 30.

The second pressing step 102 comprises pressing the stack 21 together. The stack 21 may be pressed with a pressure of at least 40 kg/cm², preferably between 40 and 80 kg/cm2, or between 50 and 70 kg/cm², or most preferably 60 kg/cm² for between 10 and 60 seconds, preferably between 10 and 45 seconds, or between 15 and 45 seconds, or between 20 and 35 seconds, or preferably around 30 seconds. The pressing temperature is between 170 to 230°C. Different temperatures are used on the top of the stack 21 and the bottom of the stack 21, for example between 170 and 200°C on the bottom of the stack 21 and between 170 and 220°C at the top of the stack. Using different temperatures at the bottom and top of the stack may reduce tension in the resulting laminate board 30. There are more fibres and melamine on the top of the stack 21, which requires more heat to cure. A higher temperature on the top of the stack 21 may therefore be beneficial to form a flat laminate board.

The second pressing step 102 results in a laminate board 30. After sufficient cooling of the laminate board 30 to for example room temperature or between 20 and 30°C, the laminate board 30 may be further processed.

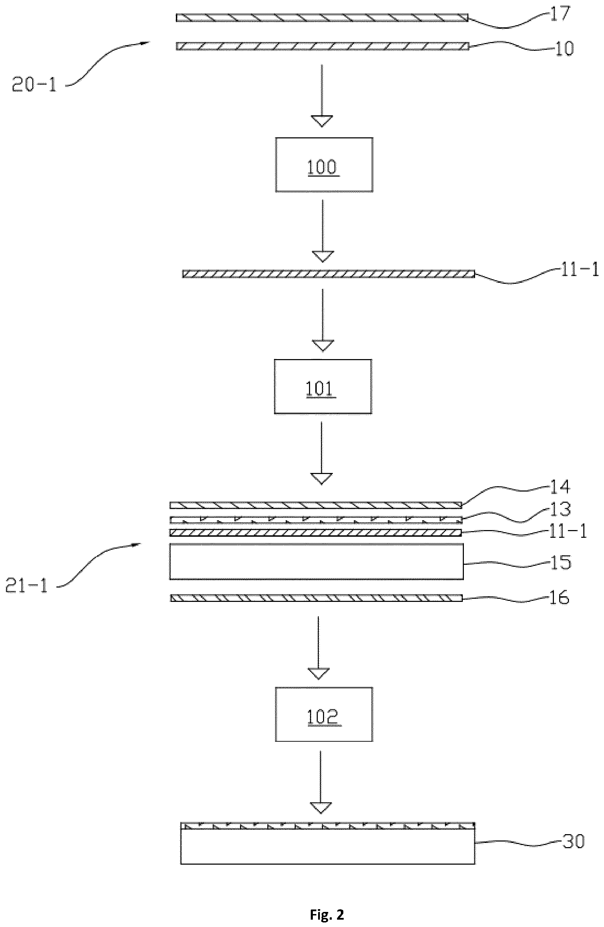

An alternative exemplary method is shown in **Fig. 2****.** In this example, the sub stack 20-1 is formed by a first sheet material, in this case a kraft paper 10, impregnated with a thermosetting resin comprising phenol, and a second sheet material, in this case a groove paper 17 impregnated with a thermosetting resin comprising melamine. In **Fig. 2****,** the groove paper 17 is positioned over the kraft paper 10, but it could equally be positioned under the kraft paper 10.

The sub stack 20-1 is then pressed using the first pressing step 100 as explained above. The first pressing step 100 results in an interim sheet 11-1, which is cut and grinded in step 101.

A stack 21-1 is then assembled. Three layers are stacked on top of a substrate board 15, for example a HDF board, in the following order: the interim sheet 11-1, a decorative sheet 13 and an overlay sheet 14. Since the interim sheet 11-1 was not completely cured in the first pressing step 100 and the groove paper 17 comprises melamine, the adhesive sheet 12 is left out. The overlay sheet 14 is impregnated with a thermosetting resin comprising melamine. The decorative sheet 13 is positioned between two melamine impregnated sheets, the interim sheet 11-1 and the overlay sheet 14, so the decorative sheet 13 may not be impregnated with a thermosetting resin. A balancing sheet 16, impregnated with a thermosetting resin comprising melamine or phenolic resin or a combination thereof, is positioned underneath the substrate board 15 to reduce tension in the final laminate board 30.

The stack 21-1 is then pressed in the second pressing step 102, as explained above. This results in a laminate board 30, which can be further processed after sufficient cooling.

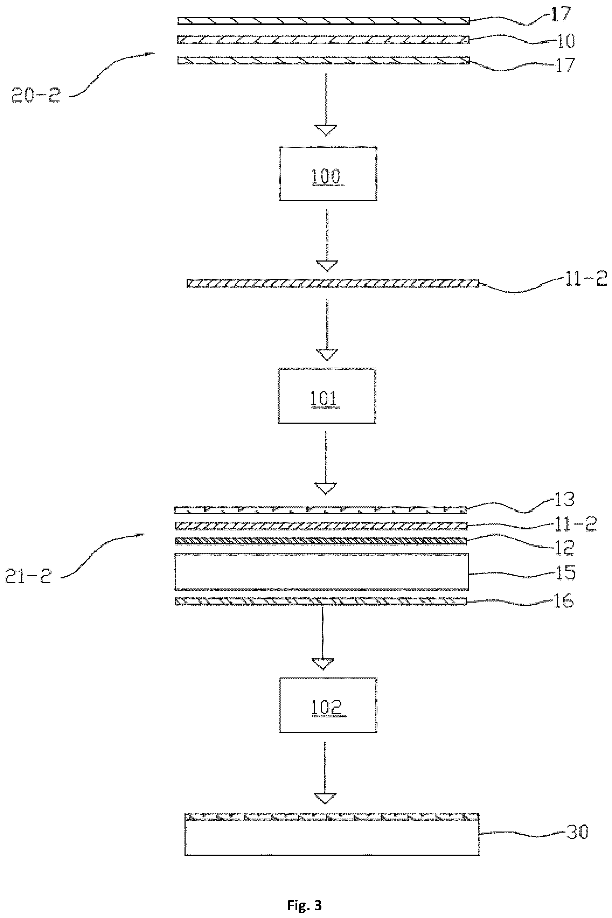

An alternative exemplary method is shown in **Fig. 3****.** In this example, the sub stack 20-2 is formed by a first sheet material, in this example a kraft paper 10, impregnated with a thermosetting resin comprising phenol, and a second and third sheet material, in this example two groove papers 17 impregnated with a thermosetting resin comprising melamine. The two groove papers 17 are positioned on either side of the kraft paper 10.

The sub stack 20-2 is then pressed using the first pressing step 100 as explained above. The first pressing step 100 results in an interim sheet 11-2, which is cut and grinded in step 101. A stack 21-2 is then assembled. Three layers are stacked on top of a substrate board 15, in the following order: an adhesive sheet 12, the interim sheet 11-2 and a decorative sheet 13. The adhesive sheet 12 and the decorative sheet 13 are impregnated with a thermosetting resin comprising melamine. Since the interim sheet 11-2 was not completely cured in the first pressing step 100 and the groove papers 17 comprise melamine, the adhesive sheet 12 is left out. A balancing sheet 16, impregnated with a thermosetting resin comprising melamine or phenolic resin or a combination thereof, is positioned underneath the substrate board 15 to reduce tension in the final laminate board 30.

The stack 21-2 is then pressed in the second pressing step 102, as explained above. This results in a laminate board 30, which can be further processed after sufficient cooling.

The parameters for the two pressing steps 100 and 102 may vary from the examples above. The pressing time, temperature and pressure are dependent on each other, so for example if the temperature in a pressing step is increased, the time may be decreased, etc. A higher pressure in a pressing step may also lead to less pressing time required for sufficient adhesion between the sheets in a sub stack or a stack. Other factors such as number and type of layers in the sub stack 20, 20-1, 20-2 and the stack 21, 21-1, 21-2 may also influence the pressing parameters. For example, in the second pressing step 102 the pressure may be up to 95 kg/cm² depending on pressing time, temperature and the number and types of layers in the stack. The type of thermosetting resin may also influence the pressing parameters of the pressing steps 100 and 102, such as the temperature and time. A phenolic thermosetting resin needs typically more time to react than a melamine thermosetting resin.

### Exemplary embodiment

A laminate board was produced by the following procedure:
- Two 158 g/m² recycled kraft papers were impregnated with a 36 w% phenolic resin with 6.8 % moisture in the impregnated papers.
- The two kraft papers were pressed together using the following parameters: a temperature of 115 °C, a pressure of 75 kg/cm², a pressing time of 68 minutes, and a cooling time in the press of 37 minutes.
- The resulting interim sheet was cooled down to room temperature and grinded.
- A stack was formed comprising the following layers in the order specified: a balancing sheet comprising two 60 g/m² sheets impregnated with a 60 w% melamine resin, a HDF substrate board, an adhesive sheet impregnated with melamine, the interim sheet, a decorative sheet impregnated with a 60 w% melamine resin and an overlay sheet comprising 50 g/m² corundum and impregnated with a 70 w% melamine resin.
- The stack was pressed together using the following parameters: a temperature of 200 °C at the side of the overlay sheet, a temperature of 210 °C at the side of the balancing sheet, a pressure of 45 kg/cm², and during a time of 30 seconds to produce an exemplary laminate board.

Four tests were performed to compare the produced exemplary laminate board with conventional DPL and HPL boards. The moisture content in the laminate boards was measured using the European standard EN322. A drop test, a wear test and a scratch test were performed following the European standard EN13329.

The results from the test can be seen in **Table 1** below.

**Table 1**

| Laminate board | DPL | HPL | Exemplary laminate board |
|---|---|---|---|
| Moisture test | 5% | 7% | 6,5% |
| Drop test | 15 mm | 8 mm | 8 mm |
| Wear test (rotations) | >4000 | | 8600 |
| Scratch test | 4 N | 5 N | 6 N |

results from moisture-, drop-, wear- and scratch tests for three different laminate boards

As can be seen from the results, the exemplary laminate board performed similarly as the HPL board on the moisture test and the drop test. The drop test revealed a higher durability of the HPL board and the exemplary laminate board.

Furthermore the exemplary laminate board performed better in the wear test than the DPL board, showing a higher wear resistance of the exemplary laminate board compared to the DPL board. The higher wear resistance may be due to the interim sheet underneath the decorative sheet and the overlay sheet, and the high heat and the short pressing time during the second pressing step. The presence of the interim sheet may prevent the corundom in the overlay sheet from penetrating far into the underlaying sheets during the second pressing step. The corundum may therefore stay closer to the top surface of the laminate board resulting in a better wear resistance.

The scratch test also shows a better result for the exemplary laminate board compared to both the DPL board and the HPL board. The exemplary board may therefore be more durable than both conventional laminate boards.

It should be noted that the above-mentioned examples illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise", and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

### Perforations

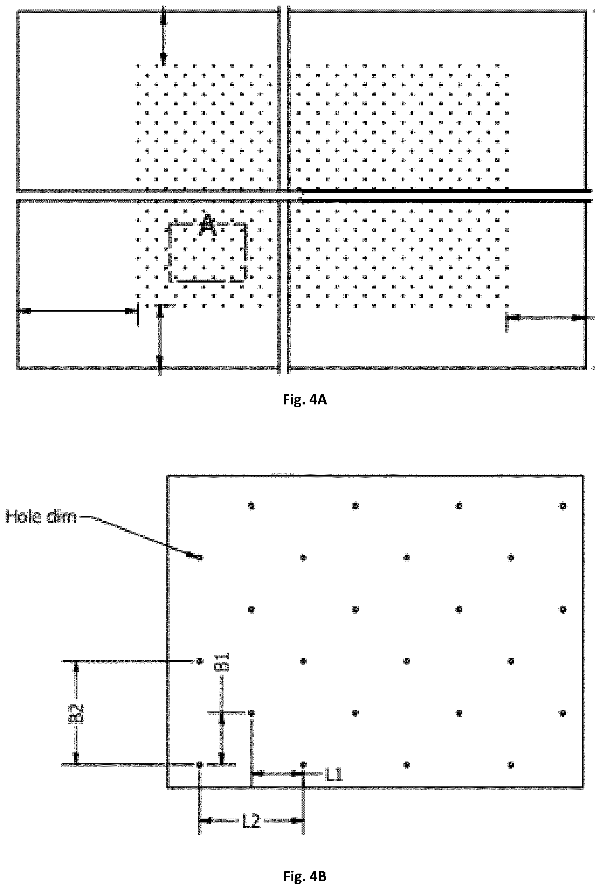

**Fig. 4A** and **Fig. 4B** illustrate a perforated sheet material that may be used according to an embodiment of the invention. In the present example, interim sheet 11 is perforated, though it may be any other sheet. **Fig. 4B** only illustrates part of a layer, not the actual edges of the layer.

**Fig. 5A** to **5C** illustrate a perforated interim sheet (11) according to an embodiment of the invention, illustrating various parameters. **Fig. 5B** and **Fig. 5C** illustrate zoomed in views of sections of the perforated interim sheet (11) illustrated in **Fig. 5A****.**

## Claims

1. A method for producing an interim sheet (11), the method comprising the steps of:
a) providing at least a first sheet material impregnated with a first thermosetting resin, and a second sheet material impregnated with a second thermosetting resin; and,
b) pressing the first and second sheet materials together, at a temperature of between 60°C and 115°C, for between 40 and 130 minutes, such that the first and second thermosetting resins become liquid, and pressing with a first sufficient pressure such that the first and second sheet materials fuse to form an interim sheet without fully curing the first and second thermosetting resins such that the first and second thermosetting resins can flow again when heated.

2. The method according to claim 1, further comprising the step of digitally printing a motif on the interim sheet (11).

3. The method according to any one of the preceding claims, wherein in step b) the temperature is between 80°C and 115°C, preferably around 90°C; and/or wherein in step b) the pressing occurs for between 60 to 110 minutes, preferably around 85 minutes; and/or wherein in step b) the first sufficient pressure is between 55 and 95 kg/cm², preferably between 65 and 85 kg/cm², preferably around 70 kg/cm².

4. The method according to any one of the preceding claims, wherein the first and/or the second thermosetting resin each comprises phenol and/or melamine.

5. A method for producing a laminate board (30), comprising the step of producing an interim sheet (11) according to the method of any one of claims 1 to 4, and further comprising the steps of:
c) forming a stack (21) comprising the following layers:
- a substrate board (15); and,
- the interim sheet (11) of step b); and,
d) pressing the stack together, at a temperature of between 170 and 230°C, for between 10 and 60 seconds, such that the first and second thermosetting resins flow again, and pressing with a second sufficient pressure such that the layers bond together to form a laminate board (30).

6. The method according to claim 5, wherein the stack (21) in step c) comprises a decorative sheet (13) impregnated with a third thermosetting resin.

7. The method according to claim 5, wherein the stack (21) in step c) comprises a decorative sheet (13) not impregnated with a thermosetting resin and an overlay sheet (14) impregnated with a fourth thermosetting resin, the overlay sheet (14) being positioned as an outermost layer adjacent the decorative sheet (13) in the stack (21).

8. The method according to any one of claims 6 or 7, wherein the first and/or the second and/or the third and/or the fourth thermosetting resin each comprises phenol and/or melamine.

9. The method according to any one of claims 5 to 8, wherein the interim sheet (11) is in direct contact with the substrate board (15) in the stack (21) formed in step c).

10. The method according to any one of claims 5 to 9, wherein in step c) the stack (21) further comprises an adhesive sheet (12) positioned between the substrate board (15) and the interim sheet (11), wherein the adhesive sheet (12) is impregnated with a fifth thermosetting resin, preferably wherein the fifth thermosetting resin comprises melamine.

11. The method according to any one of claims 5 to 10, wherein in step c) the stack (21) further comprises a balancing sheet (16), impregnated with a sixth thermosetting resin, preferably wherein the sixth thermosetting resin comprises melamine.

12. The method according to any one of claims 5 to 11, wherein step d) comprises heating an uppermost side of the stack (21) with a first temperature and a lowermost side of the stack (21) with a second temperature different from the first temperature.

13. The method according to any one of claims 5 to 12, wherein in step d) the pressing occurs for between 15 to 45 seconds, preferably between 20 to 35 seconds, preferably around 30 seconds; and/or wherein in step d) the second sufficient pressure is between 40 and 80 kg/cm², preferably between 50 and 70 kg/cm², preferably around 60 kg/cm².

14. The method according to any one of claims 5 to 13, wherein in step d) the stack (21) is pressed with a press plate on the uppermost side of the stack (21).

15. The method according to any one of claims 1 to 14, comprising the step of perforating at least one of the sheet materials, preferably comprising the step of perforating the interim sheet (11).

## Patentansprüche

1. Verfahren zum Erzeugen einer Zwischenfolie (11), wobei das Verfahren die Schritte umfasst:
a) Bereitstellen mindestens eines ersten Folienmaterials, imprägniert mit einem ersten duroplastischen Harz, und eines zweiten Folienmaterials, imprägniert mit einem zweiten duroplastischen Harz ; und
b) Zusammenpressen des ersten und des zweiten Folienmaterials bei einer Temperatur zwischen 60 °C und 115 °C über 40 bis 130 Minuten, so dass das erste und das zweite duroplastische Harz flüssig werden, und Pressen mit einem ersten ausreichenden Druck, so dass das erste und das zweite Folienmaterial zu einer Zwischenfolie verschmelzen, ohne das erste und das zweite duroplastischen Harzes vollständig auszuhärten, so dass das erste und das zweite duroplastische Harz bei Erhitzen wieder fließen können.

2. Verfahren nach Anspruch 1, ferner umfassend den Schritt des digitalen Druckens eines Motivs auf die Zwischenfolie (11).

3. Verfahren nach einem der vorhergehenden Ansprüche, wobei in Schritt b) die Temperatur zwischen 80 °C und 115 °C beträgt, vorzugsweise etwa 90 °C; und/oder wobei in Schritt b) das Anpressen zwischen 60 und 110 Minuten lang stattfindet, vorzugsweise etwa 85 Minuten; und/oder wobei in Schritt b) der erste ausreichende Druck zwischen 55 und 95 kg/cm² beträgt, vorzugsweise zwischen 65 und 85 kg/cm², vorzugsweise etwa 70 kg/cm².

4. Verfahren nach einem der vorhergehenden Ansprüche, wobei das erste und/oder das zweite duroplastische Harz jeweils Phenol und/oder Melamin umfasst.

5. Verfahren zum Erzeugen einer Laminatplatte (30), umfassend den Schritt der Erzeugen einer Zwischenfolie (11) nach dem Verfahren nach einem der Ansprüche 1 bis 4, und ferner umfassend die Schritte:
c) Ausbilden eines Stapels (21) umfassend die folgenden Schichten:
- eine Substratplatte (15); und
- die Zwischenfolie (11) aus Schritt b); und
d) Zusammenpressen des Stapels bei einer Temperatur zwischen 170 und 230 °C über 10 und 60 Sekunden, so dass das erste und das zweite duroplastische Harz wieder fließen, und Pressen mit einem zweiten ausreichenden Druck, so dass die Schichten sich verbinden, um eine Laminatplatte (30) auszubilden.

6. Verfahren nach Anspruch 5, wobei der Stapel (21) in Schritt c) eine dekorative Folie (13) umfasst, die mit einem dritten duroplastischen Harz imprägniert ist.

7. Verfahren nach nach Anspruch 5, wobei der Stapel (21) in Schritt c) eine dekorative Folie (13), die nicht mit einem duroplastischen Harz imprägniert ist, und eine Auflagefolie (14), die mit einem vierten duroplastischen Harz imprägniert ist, umfasst, wobei die Auflagefolie (14) als eine äußerste Schicht angeordnet ist, die an die dekorative Folie (13) in dem Stapel (21) angrenzt.

8. Verfahren nach einem der Ansprüche 6 oder 7, wobei das erste und/oder das zweite und/oder das dritte und/oder das vierte duroplastische Harz jeweils Phenol und/oder Melamin umfasst.

9. Verfahren nach einem der Ansprüche 5 bis 8, wobei die Zwischenfolie (11) in dem bei Schritt c) ausgebildeten Stapel (21) in direktem Kontakt mit der Substratplatte (15) steht.

10. Verfahren nach einem der Ansprüche 5 bis 9, wobei in Schritt c) der Stapel (21) ferner eine Klebefolie (12) umfasst, angeordnet zwischen der Substratplatte (15) und der Zwischenfolie (11) , wobei die Klebefolie (12) mit einem fünften duroplastischen Harz imprägniert ist, vorzugsweise wobei das fünfte duroplastische Harz Melamin umfasst.

11. Verfahren nach einem der Ansprüche 5 bis 10, wobei in Schritt c) der Stapel (21) ferner eine Ausgleichsfolie (16) umfasst, die mit einem sechsten duroplastischen Harz imprägniert ist, vorzugsweise wobei das sechste duroplastische Harz Melamin umfasst.

12. Verfahren nach einem der Ansprüche 5 bis 11, wobei Schritt d) der Erhitzen einer obersten Seite des Stapels (21) mit einer ersten Temperatur und das Erhitzen einer untersten Seite des Stapels (21) mit einer zweiten, von der ersten Temperatur verschiedenen Temperatur umfasst.

13. Verfahren nach einem der Ansprüche 5 bis 12, wobei in Schritt d) das Anpressen zwischen 15 und 45 Sekunden lang stattfindet, vorzugsweise zwischen 20 und 35 Sekunden lang, vorzugsweise etwa 30 Sekunden lang; und/oder wobei in Schritt d) der zweite ausreichende Druck zwischen 40 und 80 kg/cm² beträgt, vorzugsweise zwischen 50 und 70 kg/cm², vorzugsweise etwa 60 kg/cm².

14. Verfahren nach einem der Ansprüche 5 bis 13, wobei in Schritt d) der Stapel (21) mit einer Pressplatte an der obersten Seite des Stapels (21) gepresst wird.

15. Verfahren nach einem der Ansprüche 1 bis 14, umfassend den Schritt des Perforierens mindestens eines der Folienmaterialien, vorzugsweise umfassend den Schritt des Perforierens der Zwischenfolie (11).

## Revendications

1. Procédé de fabrication d'une feuille intermédiaire (11), le procédé comprenant les étapes suivantes :
a) la fourniture d'au moins un premier matériau en feuille imprégné d'une première résine thermodurcissable, et d'un second matériau en feuille imprégné d'une deuxième résine thermodurcissable ; et,
b) le pressage des premier et second matériaux en feuille ensemble, à une température entre 60 °C et 115 °C, durant entre 40 et 130 minutes, de telle sorte que les première et deuxième résines thermodurcissables deviennent liquides, et le pressage avec une première pression suffisante pour que les premier et second matériaux en feuille fusionnent pour former une feuille intermédiaire sans durcir complètement les première et deuxième résines thermodurcissables de telle sorte que les première et deuxième résines thermodurcissables puissent s'écouler à nouveau lorsqu'elles sont chauffées.

2. Procédé selon la revendication 1, comprenant en outre l'étape d'impression numérique d'un motif sur la feuille intermédiaire (11).

3. Procédé selon l'une quelconque des revendications précédentes, à l'étape b) la température étant entre 80 °C et 115 °C, de préférence environ 90 °C ; et/ou à l'étape b) le pressage se produisant durant entre 60 et 110 minutes, de préférence environ 85 minutes ; et/ou à l'étape b) la première pression suffisante étant comprise entre 55 et 95 kg/cm², de préférence entre 65 et 85 kg/cm², de préférence environ 70 kg/cm².

4. Procédé selon l'une quelconque des revendications précédentes, la première et/ou la deuxième résine thermodurcissable comprenant chacune du phénol et/ou de la mélamine.

5. Procédé de fabrication d'un panneau stratifié (30), comprenant l'étape de fabrication d'une feuille intermédiaire (11) conformément au procédé selon l'une quelconque des revendications 1 à 4, et comprenant en outre les étapes suivantes :
c) la formation d'un empilement (21) comprenant les couches suivantes :
- un panneau de substrat (15) ; et,
- la feuille intermédiaire (11) de l'étape b) ; et,
d) le pressage de l'empilement ensemble, à une température entre 170 et 230 °C, durant entre 10 et 60 secondes, de telle sorte que les première et deuxième résines thermodurcissables s'écoulent à nouveau, et le pressage avec une seconde pression suffisante pour que les couches se lient ensemble pour former un panneau stratifié (30).

6. Procédé selon la revendication 5, l'empilement (21) à l'étape c) comprenant une feuille décorative (13) imprégnée d'une troisième résine thermodurcissable.

7. Procédé selon la revendication 5, l'empilement (21) à l'étape c) comprenant une feuille décorative (13) non imprégnée d'une résine thermodurcissable et une feuille de recouvrement (14) imprégnée d'une quatrième résine thermodurcissable, la feuille de recouvrement (14) étant positionnée comme couche la plus externe adjacente à la feuille décorative (13) dans l'empilement (21).

8. Procédé selon l'une quelconque des revendications 6 ou 7, la première et/ou la deuxième et/ou la troisième et/ou la quatrième résine thermodurcissable comprenant chacune du phénol et/ou de la mélamine.

9. Procédé selon l'une quelconque des revendications 5 à 8, la feuille intermédiaire (11) étant en contact direct avec le panneau de substrat (15) dans l'empilement (21) formé à l'étape c).

10. Procédé selon l'une quelconque des revendications 5 à 9, à l'étape c) l'empilement (21) comprenant en outre une feuille adhésive (12) positionnée entre le panneau de substrat (15) et la feuille intermédiaire (11), la feuille adhésive (12) étant imprégnée d'une cinquième résine thermodurcissable, de préférence la cinquième résine thermodurcissable comprenant de la mélamine.

11. Procédé selon l'une quelconque des revendications 5 à 10, à l'étape c) l'empilement (21) comprenant en outre une feuille d'équilibrage (16), imprégnée d'une sixième résine thermodurcissable, de préférence la sixième résine thermodurcissable comprenant de la mélamine.

12. Procédé selon l'une quelconque des revendications 5 à 11, l'étape d) comprenant le chauffage d'un côté supérieur de l'empilement (21) à une première température et d'un côté inférieur de l'empilement (21) à une seconde température différente de la première température.

13. Procédé selon l'une quelconque des revendications 5 à 12, à l'étape d) le pressage se produisant durant entre 15 et 45 secondes, de préférence entre 20 et 35 secondes, de préférence environ 30 secondes ; et/ou à l'étape d) la seconde pression suffisante étant entre 40 et 80 kg/cm², de préférence entre 50 et 70 kg/cm², de préférence environ 60 kg/cm².

14. Procédé selon l'une quelconque des revendications 5 à 13, à l'étape d) l'empilement (21) étant pressé avec une plaque de presse sur le côté supérieur de l'empilement (21).

15. Procédé selon l'une quelconque des revendications 1 à 14, comprenant l'étape de perforation d'au moins l'un des matériaux en feuille, comprenant de préférence l'étape de perforation de la feuille intermédiaire (11).
